(19) Europäisches Patentamt / European Patent Office / Office européen des brevets

(11) **EP 2 836 743 B1**

(12) **EUROPEAN PATENT SPECIFICATION**

(45) Date of publication and mention
of the grant of the patent:
**27.12.2017 Bulletin 2017/52**

(21) Application number: **13775467.7**

(22) Date of filing: **05.04.2013**

(51) Int Cl.:
*F16H 57/021* *(2012.01)*    *F16H 1/26* *(2006.01)*
*F16H 57/00* *(2012.01)*    *F16H 3/091* *(2006.01)*
*F16H 1/20* *(2006.01)*    *F16H 1/22* *(2006.01)*
*F16H 57/02* *(2012.01)*

(86) International application number:
**PCT/SE2013/050372**

(87) International publication number:
**WO 2013/154487 (17.10.2013 Gazette 2013/42)**

(54) **MOBILE VEHICLE GEAR UNIT**

MOBILFAHRZEUG-GETRIEBEEINHEIT

BOÎTE À ENGRENAGES POUR VÉHICULE MOBILE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **12.04.2012 SE 1250367**

(43) Date of publication of application:
**18.02.2015 Bulletin 2015/08**

(73) Proprietor: **Autoinvent Transip AB
790 23 Svärdsjö (SE)**

(72) Inventor: **BENNSTEDT, Niklas
S-790 23 Svärdsjö (SE)**

(74) Representative: **Awapatent AB
P.O. Box 1066
251 10 Helsingborg (SE)**

(56) References cited:
WO-A1-2012/050514    CH-A- 292 895
DE-A1- 3 018 610    DE-A1- 19 654 896
DE-B- 1 053 270    FR-A- 1 522 323
GB-A- 1 407 130    GB-A- 2 063 394
US-A- 4 297 906    US-A- 5 372 052
US-A1- 2011 133 469

## Description

### Field of the invention

The present invention further relates to a mobile vehicle gear unit comprising an input shaft, and an output shaft substantially parallel with said input shaft, the gear unit being configured for providing a non-unity transmission ratio between said input shaft and said output shaft via a layshaft arrangement.

### Background of the invention

The awareness and concern of the public with respect to environmental impact of transports is rapidly increasing. To meet such concern and awareness electric drive vehicles and low fuel-consumption vehicles are designed. An important aspect of an electric drive vehicle, and of a low-fuel consumption vehicle, is that the weight of the vehicle should be low, to reduce consumption of power and fuel, respectively. Since the motor typically rotates at a relatively high rpm, whether it is an electric motor or a petrol, diesel, biogas, or ethanol driven engine, a gear unit is needed for stepping down the rotation speed of the motor or engine to a speed suitable for rotating drive wheels of the vehicle.

US 4,297,906 discloses a gear box for a vehicle with a somewhat reduced weight. The gear box of US 4,297,906 is, however, still too heavy for efficient use in electric vehicles and low fuel-consumption vehicles, in particular when designed for the relatively high torques typical of electric motors. FR 1 522 323 A discloses a mobile vehicle gear unit according to the preamble of claim 1.

DE 1 053 270 B and DE 196 54 896 A1 disclose generic gear units.

There is a need for a gear unit offering higher reliability, lower weight, and/or lower cost of manufacture.

### Summary of the invention

It is an object of the present invention to solve, or at least mitigate, parts or all of the above mentioned problems.

According to the invention, the above mentioned problems are solved, or at least mitigated, by a mobile vehicle gear unit comprising an input shaft, and an output shaft substantially parallel with said input shaft, the gear unit being configured for providing a transmission ratio between said input shaft and said output shaft via a layshaft arrangement, the output shaft being provided with a driven gear in mesh with a drive gear of said layshaft arrangement, and the input shaft being provided with a drive gear in mesh with a driven gear of said layshaft arrangement, the transmission ratio being non-unity such that one gear of the driven gear of the output shaft and the drive gear of the input shaft will be arranged for operating at a relatively lower torque, and the other gear will be arranged for operating at a relatively higher torque, said relatively higher torque being higher than said relatively lower torque; the input shaft being journalled to the output shaft in a main thrust bearing arrangement which is arranged in an axial recess of the output shaft and limits axial movement of the input shaft relative to the output shaft in two axial directions; said driven gear of said output shaft being helical of a first hand; said drive gear of said input shaft being helical of a second hand, said second hand being the same as the first hand for a positive transmission ratio and opposite to said first hand for a negative transmission ratio; and said gear arranged for operating at a relatively lower torque having a helix angle exceeding the helix angle of said gear arranged for operating at a relatively higher torque. In such a gear unit, when torque is supplied to the input shaft in an input direction, axial thrust generated by the driven gear of the output shaft will be directed in said first axial direction. Axial thrust generated by the drive gear of the input shaft will be directed in a second axial direction, which is substantially opposite to said first axial direction. Hence, input and output shaft axial thrusts will be of opposite directions and applied to the same location, i.e. where the shafts are joined by the main thrust bearing arrangement. Such a gear unit may be used for carrying out the method described hereinbefore, and thereby relates to the same inventive concept. The difference in helix angles will operate so as to make the magnitudes of said thrusts more equal, so as to increase the extent to which said axial thrusts at least partly cancel each other out in said main thrust bearing arrangement. The resultant axial thrust acting on the input and output shafts will thereby be limited. Thanks to the input and output shafts being arranged for applying their respective axial thrusts to the same, axially non-yielding main thrust bearing arrangement, axial and radial movement of the shafts is reduced. This allows for tighter gearing backlash, which prolongs service life of the gear unit. Furthermore, reduced axial movement reduces rolling element skidding in the axial thrust bearings.

According to an embodiment, said output shaft is arranged on a first side of said main thrust bearing arrangement, and said input shaft is arranged on a second side of said main thrust bearing arrangement, said second side being opposite to said first side.

According to the invention said main thrust bearing arrangement is a bidirectional thrust bearing arrangement for limiting axial movement of the output shaft in two axial directions. Thereby, axial forces cancel out in the main thrust bearing support or the main thrust bearing, as the case may be, regardless of the direction of rotation or input torque of the gear unit.

According to an embodiment, said input shaft is connected to a power source, such as an electric motor or an internal combustion engine, for driving the input shaft in an input direction of rotation, and the hand of said driven gear of said output shaft is oriented for applying output shaft axial thrust in said first axial direction when the power source transmits torque to the input shaft in said input direction. Implicitly, the axial thrust of the output shaft will thereby be applied in said second axial direction substantially opposite to said first axial direction. By having the mobile vehicle gear unit connected to a power source, for receiving rotary power primarily in said input direction therefrom, it is possible to design the gear unit so as to withstand a larger torque in the predetermined input direction than in a direction of rotation opposite to said input direction. Thereby, weight may be saved and the construction may be simpler, since thrust bearing(s) may be unidirectional, and/or housing walls may be made thinner.

According to an embodiment, each of said input and output shafts is axially preloaded in a preloading arrangement. Each of said input and output shafts may be preloaded in a preload arrangement either between a pair of auxiliary preload bearings, or between a main thrust bearing arrangement and an auxiliary preload bearing. In the latter case, the main thrust bearing arrangement will have the double function of cancelling out dynamic axial loads, and acting as one of the preload bearings of a preloading arrangement. The auxiliary preload bearings may be located e.g. at the respective end walls of a gear unit housing. By directing the dynamic axial thrust to a single, axially rigid location, where the thrusts at least partly cancel out when the gear unit is driven in a forward, high-load drive direction, the magnitude of the preload force can be selected more freely and with a higher accuracy. In the case of tapered roller bearings, an accurate axial preloading reduces skidding and brings a greater portion of a bearing's rolling elements in contact with bearing inner and outer races during a greater portion of each turn of the respective shaft, thereby sharing the axial load more accurately between the rolling elements. For this reason, a correctly preloaded thrust bearing generally has a longer life expectancy than a non-preloaded thrust bearing. However, a too highly preloaded thrust bearing generally has a shorter life expectancy than a non-preloaded bearing. By cancelling out a significant portion of the dynamic axial forces, the preload of the shafts can be kept on a lower, more constant, and more accurately selectable level. Furthermore, any housing or support structure carrying the preload thrust bearings may be dimensioned rigid enough for the static preload, without becoming excessively heavy as it would have been if required to take up heavy dynamic axial thrusts originating from operation of helical gears as well. It also becomes possible to arrange the preload thrust bearings in a flexible support so as to provide a selected, constant axial preloading force. Still further, axial preloading also to some extent reduces the axial and radial movement of the respective shafts, thereby prolonging service life expectancy.

According to an embodiment, said input and output shafts are substantially concentric. Thereby, a minimum of transversal torque will act on the main thrust bearing/main thrust bearing support/, and minimum of bending force will act on the output shaft. Throughout this disclosure, "substantially concentric" is to be construed as a central axis of at least one of the input shaft and the output shaft extending through a surface defined by the outer boundaries of a thrust bearing supporting the other shaft.

According to an embodiment, said driven gear of said output shaft has an output shaft driven gear pitch diameter $D_{out}$ and an output shaft driven gear helix angle $\psi_{out}$; said drive gear of said input shaft has an input shaft drive gear pitch diameter $D_{in}$ and an input shaft drive gear helix angle $\psi_{in}$; and

said driven gear of said output shaft and said drive gear of said input shaft satisfy a condition corresponding to

$$0.2 < \left| I_{tot} \frac{D_{in} \tan \Psi_{out}}{D_{out} \tan \Psi_{in}} \right| < 5 \, ,$$

wherein $I_{tot}$ is the transmission ratio of said gear unit. Thereby, the resultant axial force is even further reduced. Preferably,

$$0.5 < \left| I_{tot} \frac{D_{in} \tan \Psi_{out}}{D_{out} \tan \Psi_{in}} \right| < 2 \, ,$$

such that input and output axial thrusts to an even greater extent cancel out in the main thrust bearing or the main thrust bearing support, as the case may be.

According to an embodiment, said layshaft arrangement comprises at least one layshaft, and optionally a plurality of substantially parallel layshafts connected in series, each layshaft being provided with a helical drive gear and a helical driven gear, the driven gear of each layshaft being of the same hand as the drive gear of the same layshaft. Thereby, axial thrusts of each layshaft at least partly cancel out as a compressive or tensile axial force within each respective layshaft. Preferably, for each layshaft i of said at least one layshaft, or of said optional plurality of layshafts, the respective drive gear has a drive gear pitch diameter $D_{drive, i}$ and a drive gear helix angle $\psi_{drive, i}$; the respective driven gear has a driven gear pitch diameter $D_{driven, i}$ and a driven gear helix angle $\psi_{driven, i}$, the driven gear helix angle $\psi_{driven, i}$ being different from the drive gear helix angle $\psi_{drive, i}$; and

$$0.2 < |(D_{drive, i}*\tan \psi_{driven, i})/(D_{driven, i}*\tan \psi_{drive, i})| < 5.$$

Under this particular condition, the axial thrust components acting on each layshaft cancel each other out to an even greater extent. Even more preferably,

$$0.5 < |(D_{drive, i}*\tan \psi_{driven, i})/(D_{driven, i}*\tan \psi_{drive, i})| < 2,$$

such that most of the axial thrust components acting on each layshaft cancel out. It will be appreciated that $\psi_{drive, i}$ does not need to be identical to $\psi_{driven, i-1}$; such may be the case e.g. if the respective shafts are not exactly parallel.

According to an embodiment, said gear unit is a step-down gear. And according to an embodiment, said gear unit has a transmission ratio, between said input shaft and said output shaft, of 30:1 or less. Preferably the transmission ratio is in the range of 20:1 to 0.5:1, and more preferably in the range of 15:1 to 0.5:1. The gear unit designs disclosed herein are particularly well suited for the large output torques of a step-down gear and/or a high-transmission ratio gear unit.

According to an embodiment , said gear unit has a fixed transmission ratio. Such a design is relatively compact and reliable, making it well suited for electric vehicles having electric motors that do not require any possibility to vary the gear ratio between the electric motor and the drive wheels.

According to another embodiment the gear unit has a variable transmission ratio. Such a gear unit is particularly well suited for electric drive vehicles with high top speed, and vehicles with internal combustion engines.

According to an embodiment, the driven gear of the output shaft is axially fixed to the output shaft, and the drive gear of the input shaft is axially fixed to the input shaft.

According to an embodiment, for each layshaft of said layshaft arrangement, the driven gear of the layshaft is axially fixed relative to the drive gear of the layshaft.

According to an embodiment, for each shaft of said gear unit, the angular shaft play $\theta_S$ relative to another shaft of said gear unit satisfies the condition

$$\theta_S < \tan^{-1}(0.11/n_G)$$

wherein $n_G$ represents the number of teeth of a gear of said shaft, said gear being in engagement with a gear of said another shaft.

According to one embodiment the output shaft is tapering inwardly in a direction toward a main thrust bearing arrangement.

## Brief description of the drawings

The above, as well as additional objects, features and advantages of the present invention, will be better understood through the following illustrative and non-limiting detailed description of preferred embodiments of the present invention, with reference to the appended drawings, where the same reference numerals will be used for similar elements, wherein:

Fig. 1 is a schematic side view of an electric drive vehicle;
Fig. 2 is a schematic side view of the drive unit of the electric drive vehicle of Fig. 1;
Fig. 3 is a schematic view in perspective of gearing of a mobile vehicle gear unit;
Fig. 4 is a schematic top view in section of a first embodiment of a mobile vehicle gear unit comprising the gearing of Fig. 3, which is not claimed;
Fig. 5a is schematic cross-section side view, taken along the line V-V, of the gear unit of Fig. 4;
Fig. 5b is a magnified view of the area of Fig. 5a defined by a dashed rectangle;
Fig. 6a is schematic cross-section side view of a second embodiment of a gear unit according to the invention;
Fig. 6b is a magnified view of the area of Fig. 6a defined by a dashed rectangle;
Fig. 7a is schematic cross-section side view of a third embodiment of a gear unit according to the invention;
Fig. 7b is a magnified view of the area of Fig. 7a defined by a dashed rectangle;

Fig. 8a is schematic cross-section top view of a fourth embodiment of a gear unit according to the invention; and
Fig. 8b is a schematic cross-section side view, taken along the line B-B, of the gear unit of Fig. 8a.
Fig. 9a is schematic side view of a fifth embodiment of a gear unit according to the invention;
Fig. 9b is a schematic cross-section side view of the gear unit of Fig. 9a.

## Detailed description of the exemplary embodiments

Mobile vehicle gear units of prior art have a few weaknesses. By way of example, the shafts of a mobile vehicle gear unit are subjected to axial thrust, which is taken up by thrust bearings in the gear unit housing. For example, an electric motor transmits very high levels of torque to the gear unit already at low rpm; hence, the radial and axial load on the input shaft bearings may be very high. The high load may cause the gear unit housing to flex or yield, leading to increased axial bearing play and requiring substantial gearing backlash. Such axial play may limit the lifetime of the mobile vehicle gear unit; hence, the gear unit housing needs to be designed to take up substantial forces, making it heavy.

The direction of axial thrust varies with the load condition on the mobile vehicle gear unit; therefore, axially unconstrained shafts may translate in the axial direction depending on the rpm and torque transmitted from the electric motor. Within a bearing, a loss of contact between rolling elements and a race surface may result in intermittent, skidding contact between race surface and rolling elements. This phenomenon is called skidding, and may increase bearing wear. Still further, alternating torsion transients, occurring due to substantial backlash, i.e. clearance between the teeth of meshing gears, also contribute to shorten the lifetime of a mobile vehicle gear unit.

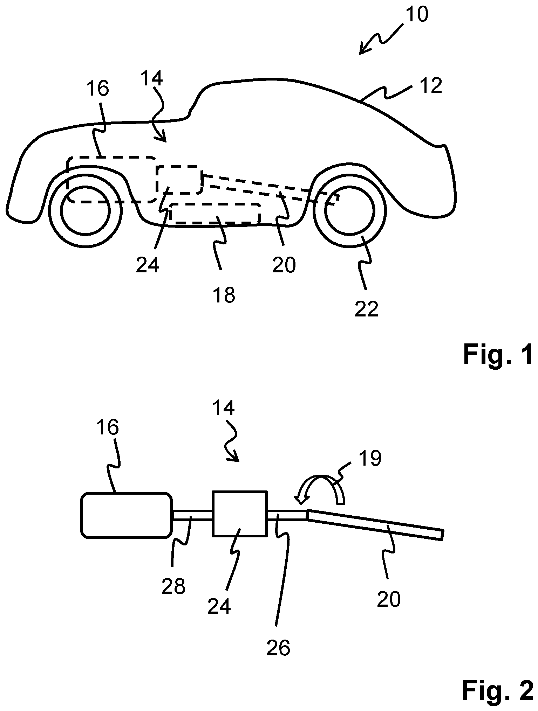

Fig. 1 schematically illustrates a vehicle 10 comprising a car body 12 and a drive unit 14. The drive unit 14 comprises a motor 16. The motor 16 may, for example, be an electric motor, a displacement engine, for example an internal combustion engine, such as petrol or diesel engine, or a dynamic engine, such as jet engine. The drive unit 14 further comprises an energy storage system 18, which may be a battery pack if the motor 16 is an electric motor, and a fuel tank if the motor 16 is an internal combustion engine, a drive shaft 20 for transferring rotation to drive wheels 22 of the vehicle 10, and a mobile vehicle gear unit 24 connecting the motor 16 to the drive shaft 20. A typical rotation speed of the motor 16 may, by way of example, be between 1000 and 20 000 rpm.

Fig. 2 schematically illustrates the mobile vehicle gear unit 24. The motor 16 is connected to the drive wheels 22 (Fig. 1) via the gear unit 24, which steps down the high rotation speed of the motor 16 to a lower speed of the drive shaft 20, and of the drive wheels 22. A gear unit output shaft 26 interconnects the gear unit 24 with the drive shaft 20 and the drive wheels 22, and provides a low-speed, high-torque rotary motion, in a driving direction 19, to the drive wheels 22, which convert the rotary motion to a forward movement of the vehicle 10. A gear unit input shaft 28 interconnects the motor 16 with the gear unit 24, and provides a high-speed, low-torque rotary motion to the gear unit 24.

Typical drive wheels 22 may, by way of example, be designed for operating at a rotation speed of between 100 and 5000 rpm (revolutions per minute). The total transmission ratio $I_{tot}$ of the gear unit 24 can be defined as the signed rotation speed of the input shaft 28 divided by the signed rotation speed of the output shaft 26, when both shafts 28, 26 are viewed in a direction from the input shaft 28 to the output shaft 26. When the input shaft 28 rotates in one direction, and the output shaft 26 rotates in the same direction, i.e., the sign of the input shaft 28 rotation is the same as the sign of the output shaft 26 rotation, then the total transmission ratio $I_{tot}$ will be positive (dividing numbers of the same sign), and when the input shaft 28 rotates in one direction, and the output shaft 26 rotates in another direction, i.e., the sign of the input shaft 28 rotation is different from the sign of the output shaft 26 rotation, then the total transmission ratio $I_{tot}$ will be negative (dividing numbers of different sign). Hence, the total transmission ratio $I_{tot}$ of the gear unit 24 is preferably +/-30:1 or less.

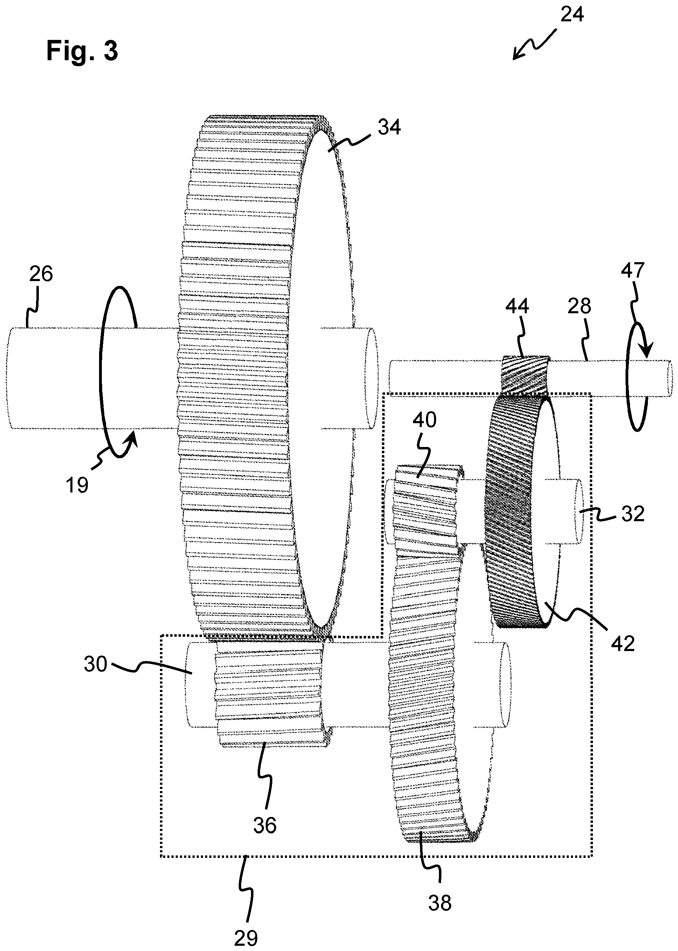

Fig. 3 illustrates the gearing of the gear unit 24 in greater detail. The output shaft 26 is connected to the input shaft 28 via a layshaft arrangement 29 comprising a first layshaft 30 and a second layshaft 32, which are connected in series. The output shaft 26 is provided with a driven gear 34, which is in mesh with a drive gear 36 on the first layshaft 30. The driven gear 34 of the output shaft 26 has a larger pitch diameter $D_{out}$ than the corresponding pitch diameter $D_{drive, 1}$ of the drive gear 36 of the first layshaft 30, such that the engagement of the driven gear 34 of the output shaft 26 with the drive gear 36 of the first layshaft 30 provides a first step-down, of transmission ratio $I_1$, of the rotary speed from the first layshaft 30 to the output shaft 26.

The first layshaft 30 is provided with a driven gear 38, which is in mesh with a drive gear 40 on the second layshaft 32. The driven gear 38 of the first layshaft 30 has a larger pitch diameter $D_{driven, 1}$ than the corresponding pitch diameter $D_{drive, 2}$ of the drive gear 40 of the second layshaft 32, such that the engagement of the driven gear 38 of the first layshaft 30 with the drive gear 40 of the second layshaft 32 provides a second step-down, of transmission ratio $I_2$, of the rotary speed from the second layshaft 32 to the first layshaft 30.

The second layshaft 32 is provided with a driven gear 42, which is in mesh with a drive gear 44 on the input shaft 28. The driven gear 42 of the second layshaft 32 has a larger pitch diameter $D_{driven, 2}$ than the corresponding pitch diameter $D_{in}$ of the drive gear 44 of the input shaft 28, such that the engagement of the driven gear 42 of the second layshaft 32 with the drive gear 44 of the input shaft 28 provides a third step-down, of transmission ratio $I_3$, of the rotary

speed from the input shaft 28 to the second layshaft 32. Hence, the gear unit 24 comprises three gear steps of transmission ratios $I_1$, $I_2$, $I_3$, which provide a total transmission ratio $I_{tot}= I_1*I_2*I_3$ from the input shaft 28 to the output shaft 26.

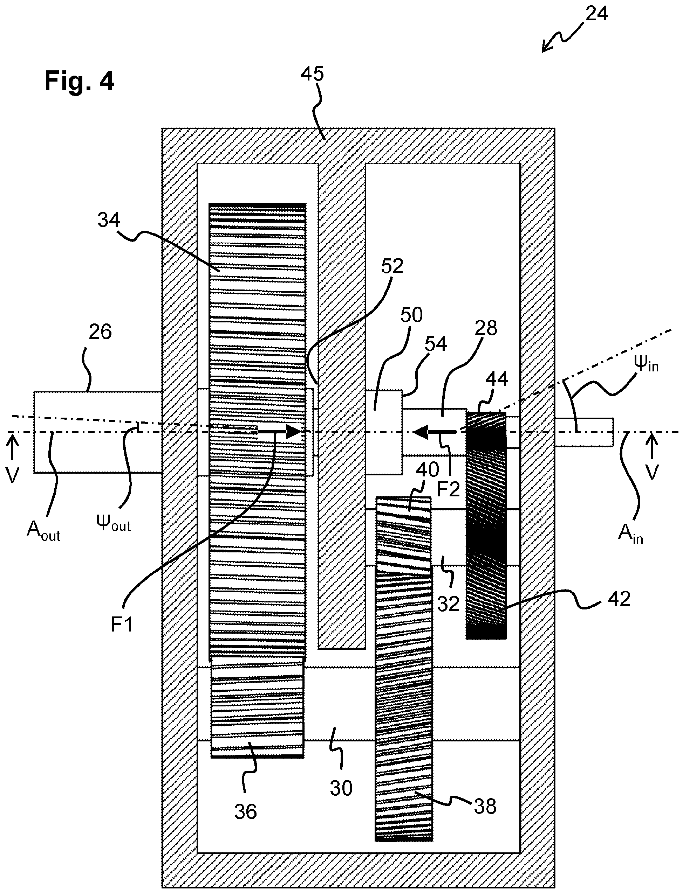

Fig. 4 illustrates the mobile vehicle gear unit 24 arranged in a gear unit housing 45.

The driven gear 34 of the output shaft 26 is a helical gear of a first hand, said first hand in this example being right hand, right hand being defined as the teeth twisting clockwise as they recede from an observer looking along the axis $A_{out}$ of the driven gear 34 of the output shaft 26. The driven gear 34 of the output shaft 26 further has a helix angle $\psi_{out}$, defined as the unsigned value of the angle formed between a tangent to the gear's helix at the pitch circle, and the direction of the central axis $A_{out}$ of the driven gear 34.

The drive gear 44 of the input shaft 28 is a helical gear of a second hand, said second hand in this example being left hand, defined as the teeth twisting counter-clockwise as they recede from an observer looking along the axis $A_{in}$ of the drive gear 44 of the input shaft 28. The drive gear 44 of the input shaft 28 further has a helix angle $\psi_{in}$, defined as the unsigned value of the angle formed between a tangent to the gear's helix at the pitch circle, and the direction of the central axis $A_{in}$ of the drive gear 44. The same definition of helix angle applies, mutatis mutandis, to the other helical gears of the gear unit 24.

When the output shaft 26 is rotated in the driving direction 19 (Fig. 3), said driving direction being clockwise, as seen in the direction of the central axis $A_{out}$ of the output shaft 26 towards the input shaft 28, the helical driven gear 34 of the output shaft 26, which is axially fixed to the output shaft 26, will generate an axial thrust F1 acting on the output shaft 26. Due to the hand of the driven gear 34 of the output shaft 26, the axial thrust F1 will be directed towards the input shaft 28.

The drive gear 44 of the input shaft 28, which, via said first and second layshafts 30, 32, will rotate in an input direction 47 (Fig. 3) opposite to the driving direction 19, will generate an axial thrust F2. The drive gear 44 of the input shaft 28 is axially fixed to the input shaft 28, such that the axial force F2 will act on the input shaft 28. Due to the hand of the drive gear 44 of the input shaft 28, the axial thrust F2 will be directed towards the output shaft 26. The directions of the axial thrusts F1, F2 are illustrated by arrows.

The output shaft 26 and the input shaft 28 are concentric, and meet at a main thrust bearing support 50. At the main thrust bearing support 50, the output and input shafts 26, 28 are journalled in a manner which will be described in more detail further below. The main thrust bearing support 50 is fixed to the gear unit housing 45 in a non-rotating manner, and in this particular example forms a bracket for holding the output shaft 26 on a first, output side 52 thereof, and the input shaft 28 on a second, input side 54 thereof. The output side 52 of the main thrust bearing support 50 is opposite to the input side 54.

The main thrust bearing support 50 forms an axially rigid support structure, at which the output and input shafts 26, 28 are journalled so as to transfer the axial thrusts F1, F2 thereto. Thanks to the respective hands of the driven gear 34 of the output shaft 26, and of the drive gear 44 of the input shaft 28, being oriented such that the respective axial thrusts F1, F2 are directed in opposite directions, the axial thrusts F1, F2 will thereby at least partly cancel out in the main thrust bearing support 50. This reduces movement of the output and input shafts 26, 28 and their associated gears 34, 44, which in turn allows for tighter gearing backlash. And thanks to the output and input shafts 26, 28 being concentric, the axial thrusts F1, F2 will not result in any substantial transversal torque or bending force onto the main thrust bearing support 50, or onto the shafts 26, 28 themselves.

When torque is supplied to the input shaft 28 in the input direction 47 (Fig. 3), the axial thrusts F1, F2 cancel out as a compressive force where the output and input shafts 26, 28 meet in the main thrust bearing support 50. During normal operation of a vehicle 10 (Fig. 1), the average and instantaneous torque supplied to the mobile vehicle gear unit 24 is typically larger in the input direction 47, i.e. forward movement, than in the opposite direction. The opposite direction may, for example, be used when the vehicle 10 (Fig. 1) is to be reversed. Reversing an electric drive vehicle may be made by simply shifting the rotational direction of the electric motor, to a direction which is opposite to the input direction 47. Reversing the vehicle is usually made for very short periods of time, and at rather low load. Hence, the mobile vehicle gear unit 24 does not necessarily need to be arranged for taking up heavy axial thrusts in the opposite directions, i.e. thrusts acting so as to urge the output shaft 26 away from the input shaft 28.

According to the definition of transmission ratio $I_{tot}$ hereinbefore, opposite directions of rotation of the output shaft 26 and the input shaft 28 will yield a negative total transmission ratio $I_{tot}$. As a general rule, in order to generate an output shaft axial thrust F2 in a direction opposite to the input shaft axial thrust F1, the second hand, said second hand being the hand of the input shaft 28, should be the same as the first hand, said first hand being the hand of the output shaft 26, for an even number of layshafts connected in series between the output shaft 26 and the input shaft 28. For an odd number of layshafts connected in series between the output shaft 26 and the input shaft 28, the second hand should be the same as the first hand. Furthermore, for a clockwise driving direction 19 of the output shaft 26, as seen in the axial direction towards the input shaft 28, a right-hand driven gear 34 of the output shaft 26 should be selected for obtaining axial thrusts F1, F2 that meet at the main thrust bearing support 50. For a counter-clockwise driving direction 19 of the output shaft 26, a left-hand driven gear 34 of the output shaft 26 should be selected for obtaining axial thrusts F1, F2 that meet at the main thrust bearing support 50.

Preferably, the driven gear 34 of the output shaft 26 and the drive gear 44 of the input shaft 28 satisfy the condition:

$$0.2 < \left| I_{tot} \frac{D_{in} \tan \Psi_{out}}{D_{out} \tan \Psi_{in}} \right| < 5 \qquad (1)$$

It has been found that if this condition is satisfied, a significant portion of the axial thrusts F1, F2 of the output and input shafts 26, 28 cancel out.

More preferably,

$$0.5 < \left| I_{tot} \frac{D_{in} \tan \Psi_{out}}{D_{out} \tan \Psi_{in}} \right| < 2, \qquad (2)$$

and ideally,

$$\left| I_{tot} \frac{D_{in} \tan \Psi_{out}}{D_{out} \tan \Psi_{in}} \right| \approx 1, \qquad (3)$$

such that there is an almost complete axial thrust balance between F1 and F2. Thereby, the axial load exerted by the input and output shafts 28, 26 onto the axial end walls of the gear unit housing 45 can be essentially eliminated. As is apparent to those skilled in the art, the expressions (1) - (3) above may also be adjusted so as to compensate for the friction of the mobile vehicle gear unit 24.

As a specific example fulfilling all the above conditions, for the mobile vehicle gear unit 24 having a total transmission ratio $I_{tot}$ of 2,5:1, the driven gear of the output shaft 26 may have a pitch diameter $D_{out}$ of 110 mm (millimeters) and a helix angle $\psi_{out}$ of 12°, whereas the drive gear 44 of the input shaft 28 may have a pitch diameter $D_{in}$ of 60 mm and a helix angle $\psi_{in}$ of 16°.

In order to achieve a minimum total axial load onto the gear unit housing 45, also the layshafts 30, 32 of the layshaft arrangement 29 (Fig. 3) may be axially balanced. This may be achieved by each of the layshafts 30, 32 being equipped with a respective driven gear and a respective drive gear of the same hand, preferably with a larger helix angle on its respective larger pitch diameter gear than on its respective smaller pitch diameter gear. In the exemplary mobile vehicle gear unit 24 of Fig. 4, the drive gear 36 of the first layshaft 30 has a drive gear helix angle $\psi_{drive,1}$, and the driven gear 38 has a driven gear helix angle $\psi_{driven,1}$ of the same hand as the drive gear 36. Thereby, when the output shaft 26 is rotated in said driving direction 19, at least a portion of the axial thrusts generated by the helical gears 36, 38 of the first layshaft 30 will cancel out as a tensile force in the first layshaft 30. The pitch diameter $D_{drive,1}$ of the drive gear 36 is larger than the pitch diameter $D_{driven,1}$ of the driven gear 38; hence, the driven gear helix angle $\psi_{driven1}$ preferably exceeds the drive gear helix angle $\psi_{drive,1}$, such that axial balance is still further improved.

Preferably, for each layshaft i of a layshaft arrangement,

$$0.2 < \left| (D_{drive,i} * \tan \psi_{driven,i}) / (D_{driven,i} * \tan \psi_{drive,i}) \right| < 5, \qquad (4)$$

where, in the specific embodiment of Fig. 4, i=1 represents the respective properties $D_{driven,1}$, $\psi_{driven,1}$, $D_{drive,1}$, and $\psi_{drive,1}$ of the first layshaft 30, and i=2 represents the respective properties of the second layshaft 32. More preferably,

$$0.5 < \left| (D_{drive, i} * \tan \psi_{driven, i}) / (D_{driven, i} * \tan \psi_{drive, i}) \right| < 2, \qquad (5)$$

and ideally,

$$\left| (D_{drive, i} * \tan \psi_{driven, i}) / (D_{driven, i} * \tan \psi_{drive, i}) \right| \approx 1. \qquad (6)$$

Under those conditions, the layshafts 30, 32 may be completely balanced in the axial direction, and their journaling may be thrust bearing free, i.e. they may be journalled for substantive support only in the radial direction.

As a specific example fulfilling all the above conditions, for the mobile vehicle gear unit 24 of Fig. 3, the drive gear 36 of the first layshaft 30 may have a pitch diameter $D_{drive,1}$ of 80 mm and a helix angle $\psi_{drive.1}$ of 12°; the driven gear 38 of the first layshaft 30 may have a pitch diameter $D_{driven,1}$ of 100 mm and a helix angle $\psi_{driven,1}$ of 15°; the drive gear 40 of the second layshaft 32 may have a pitch diameter $D_{drive,2}$ of 75 mm and a helix angle $\psi_{drive.2}$ of 15°; and the driven gear 42 of the second layshaft 32 may have a pitch diameter $D_{driven,2}$ of 80 mm and a helix angle $\psi_{driven,2}$ of 16°.

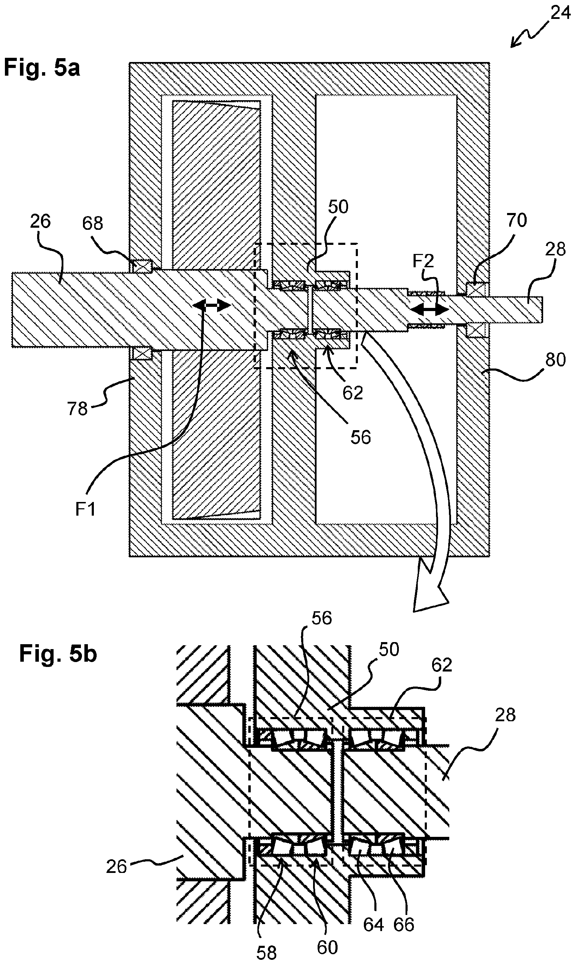

Fig. 5a, showing the section V-V along the central axis $A_{out}$ of Fig. 4, illustrates an exemplary journaling of the output and input shafts 26, 28, and the magnified view of Fig. 5b illustrates the details of how the shafts 26, 28 are journalled to the main thrust bearing support 50. The output shaft 26 is journalled to the main thrust bearing support 50 in an output shaft main thrust bearing arrangement 56, which comprises a first thrust bearing, embodied as a first tapered roller bearing 58, and a second thrust bearing, embodied as a second tapered roller bearing 60. The two tapered roller bearings 58, 60 taper in opposite directions, such that they together form a bidirectional thrust bearing arrangement, i.e. the output shaft thrust bearing arrangement 56 is adapted for supporting substantial axial loads in both axial directions.

Similarly, the input shaft 28 is journalled to the main thrust bearing support 50 in an input shaft main thrust bearing arrangement 62, which also comprises two tapered roller bearings 64, 66 tapering in opposite directions, thereby forming a bidirectional thrust bearing arrangement. The output and input main thrust bearing arrangements 56, 62 are co-located on the main thrust bearing support 50, which interconnects said main thrust bearing arrangements 56, 62 in an axially rigid manner.

Thanks to the output and input shaft main thrust bearing arrangements 56, 62 being bidirectional, when torque is supplied to the input shaft 28 in a direction opposite to said input direction 47, the axial thrusts F1, F2 cancel out as a tensile force in the main thrust bearing support 50. Thereby, axial loads onto axial end walls 78, 80 of the gear unit housing 45 are reduced regardless of the direction of operation or the load direction of the input shaft 28.

An auxiliary bearing 68 supports the output shaft 26 in the radial direction. Since the output shaft main thrust bearing arrangement 56 is bidirectional and provides all axial support that is needed, the auxiliary bearing 68 does not need to be arranged for providing any axial support. Hence, the auxiliary bearing 68 may be a simple, radially supporting bearing of e.g. the cylindrical, non-tapered roller bearing type.

Alternatively, also the auxiliary bearing 68 may be an axial thrust bearing, e.g. of the tapered roller bearing type, which supports the output shaft 26 in an axial direction. Thereby, the auxiliary bearing 68 may be used as a preload bearing for axially preloading the output shaft 26 between the auxiliary bearing 68 and the output shaft main thrust bearing arrangement 56. In such a configuration, the auxiliary bearing 68 and the output shaft main thrust bearing arrangement 56 together form a preloading arrangement, which may permanently keep the output shaft 26 under tensile or compressive load. Thereby, the lifetime of the output shaft main thrust bearing arrangement 56 may be extended. Furthermore, a minimum of backlash can be designed into the mating of the teeth of the gears of the mobile vehicle gear unit 24, such that the operational lifetime of the entire gear unit 24 is increased.

Also the input shaft 28 may be preloaded in a preloading arrangement formed by an auxiliary axial thrust bearing 70 and the input shaft main thrust bearing arrangement 62. It is also possible to accurately preload the layshafts 30, 32, which may be axially balanced in line with what has been described hereinbefore with reference to fig. 4, in similar preloading arrangements of thrust bearings.

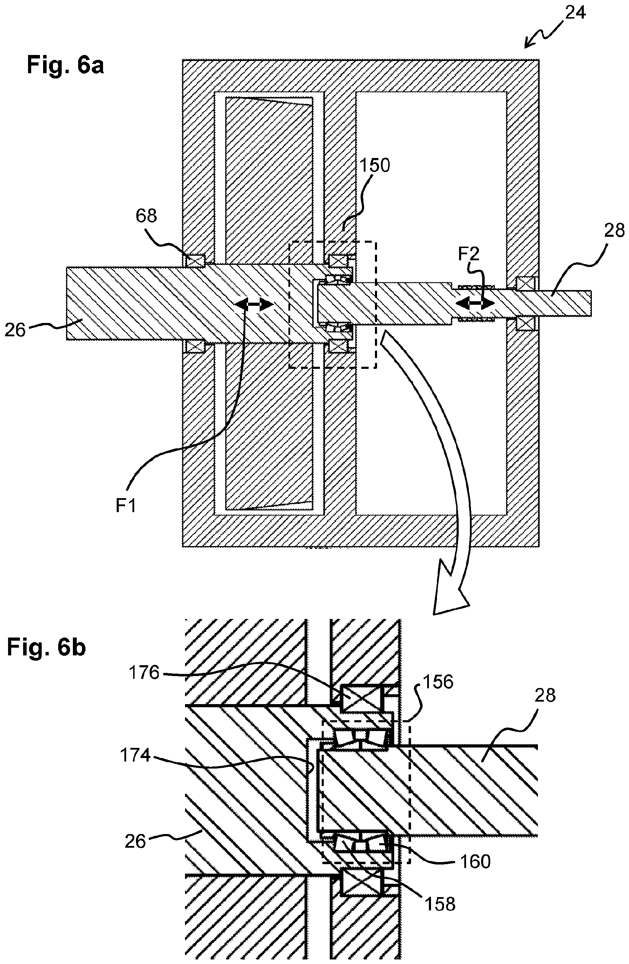

Figs. 6a-b illustrate an alternative configuration of the bearings of the mobile vehicle gear unit 24, according to which configuration the output shaft 26 and the input shaft 28 are arranged for transferring axial thrusts F1, F2 more directly to each other. In the particular example illustrated in Fig. 6a-b, the input shaft 28 is journalled to the output shaft 26 via a main thrust bearing arrangement 156, which allows the output and input shafts 26, 28 to rotate independently of each other. The main thrust bearing arrangement 156 comprises a first tapered roller bearing 158 and a second tapered roller bearing 160, which are arranged in an axial recess 174 of the output shaft 26. The two tapered roller bearings 158, 160 taper in opposite directions, such that they together form a bidirectional thrust bearing arrangement. Thereby, the axial thrusts F1, F2 of the output and input shafts 26, 28 meet and at least partly cancel each other out at the main thrust bearing arrangement 156 irrespective of the input direction of the input shaft 28. The main thrust bearing arrangement 156 thereby forms an axially rigid support structure for non-yieldingly receiving axial loads from both the output shaft 26 and the input shaft 28.

The output shaft 26 is journalled in an auxiliary bearing 176, which is mounted on a bearing support 150. The auxiliary bearing 176 does not need to be a thrust bearing, since axial thrust will mainly be borne by the main thrust bearing arrangement 156. Similar to what has been described above with reference to Fig. 5a-b, however, the auxiliary bearing 176 may, as an alternative, be a thrust bearing that can be used for preloading the output shaft 26 against e.g. a second auxiliary bearing 68.

Neither the bearing support 150 nor the auxiliary bearing 176 mounted thereto are necessary for balancing the dynamic axial thrusts that occur when operating the gear unit 24; hence, they can be dispensed with, and radial support may be provided by other means available to the person skilled in the art.

As an alternative to incorporating into the mobile vehicle gear unit 24 a main thrust bearing arrangement 156 that is bidirectional, for a gear unit that is intended for an application in which it is mainly exposed to high torques in a single, predetermined input direction 47 (Fig. 3), it would be sufficient to use a unidirectional main thrust bearing arrangement as has been described in the foregoing.

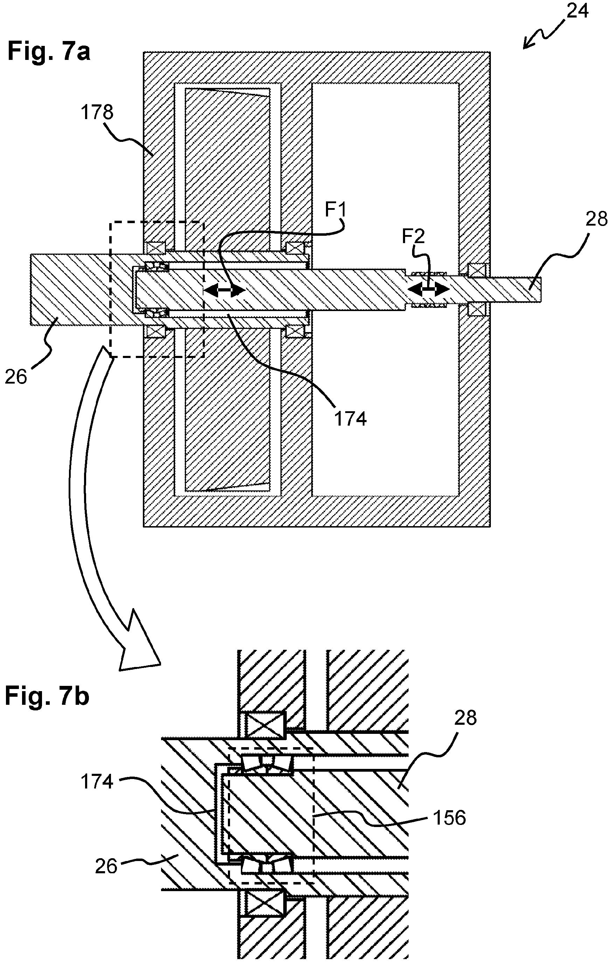

Figs. 7a-b illustrate yet an alternative configuration of the bearings of the mobile vehicle gear unit 24, according to which configuration the output shaft 26 is hollow, and the main thrust bearing arrangement 156 is located deep into the recess 174 of the output shaft 26. Even though, in Fig. 7a, the axial thrust F1 is illustrated on the input shaft 28, it will be appreciated that the thrust F1 acts on the hollow output shaft 26 surrounding the input shaft 28.

In the configuration of Figs. 7a-b, the output and input shafts 26, 28 are interconnected via a main thrust bearing arrangement 156, via which the axial thrusts F1, F2 of the shafts 26, 28 cancel out. However, as an alternative (not shown), the output shaft 26 may be journalled to the axial end wall 178 of the gear unit housing 45 in an output shaft main thrust bearing arrangement, which is configured to transfer axial thrust from the output shaft 26 to the axial end wall 178. Similarly, the input shaft 28 may be journalled to the same axial end wall 178 of the gear unit housing 45 in an input shaft main thrust bearing arrangement, which is configured to transfer axial thrust from the input shaft 28 to the axial end wall 178. In such a configuration, the axial end wall 178 of the gear unit housing 45 would form a main thrust bearing support similar to what has been described hereinbefore with reference to Fig. 5a-b. Such a configuration would however differ from the arrangement of Fig. 5a-b in that the driven gear 34 of the output shaft 26 and the drive gear 44 of the input shaft 28 would be located on the same side of the main thrust bearing support, such that one of the output and input shaft main thrust bearing arrangements would support an axially pushing force, while the other would support an axially pulling force, when the gear unit 24 is operated.

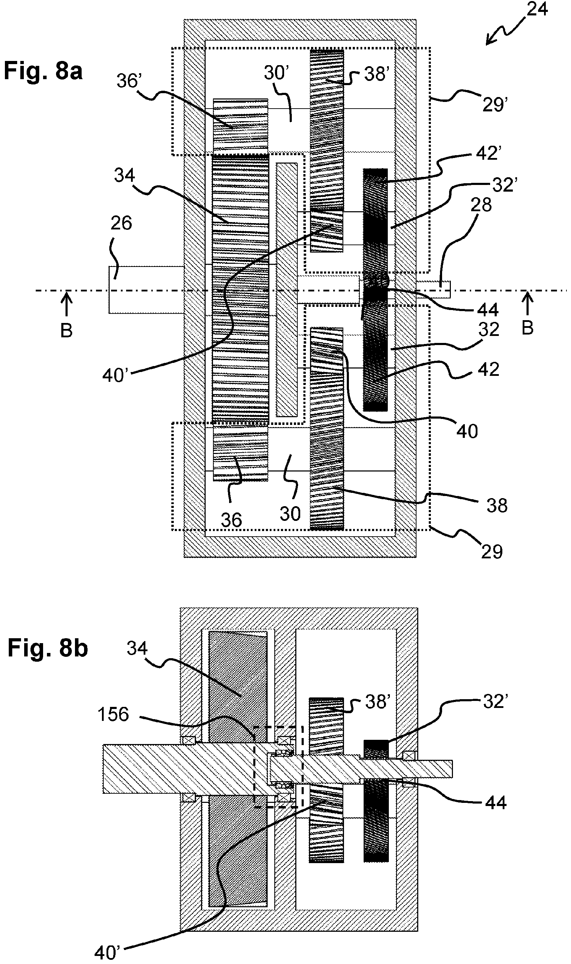

Figs. 8a-b illustrate an alternative configuration of the layshafts, according to which configuration the mobile vehicle gear unit 24 comprises a first layshaft arrangement 29 and a second layshaft arrangement 29'. Each of the layshaft arrangements 29, 29' comprises a respective first layshaft 30, 30' provided with a drive gear 36, 36' and a driven gear 38, 38', and a respective second layshaft 32, 32', said second layshaft 32, 32' also being provided with a drive gear 40, 40' and a driven gear 42, 42'. The two layshaft arrangements 29, 29' are arranged in parallel and configured to provide an identical transmission ratio $I_{tot}$ between the input shaft 28 and the output shaft 26. The output and input shafts 26, 28, as well as the layshafts 30, 30', 32, 32' of the gear unit 24 will be axially balanced under the same conditions, defined by the appended claims, as any other of the embodiments disclosed hereinbefore with reference to Figs 1-7b. In the particular example illustrated in Fig. 8b, the axial loads of the output and input shafts 26, 28 at least partly cancel out in a main thrust bearing arrangement 156, in a manner similar to what has been described in the foregoing with reference to Figs. 6a-b.

Two parallel layshaft arrangements, which are in mesh with the same driven and drive gears 34, 44, respectively, of the output and input shafts 26, 28, are illustrated in Figs. 8a-b. However, the gear unit may also be provided with any other number of parallel layshaft arrangements, and the layshafts may be connected between different sets of driven gears of the output shaft 26, and drive gears of the input shaft 28; the general principles of axial thrust balancing disclosed herein will nevertheless apply.

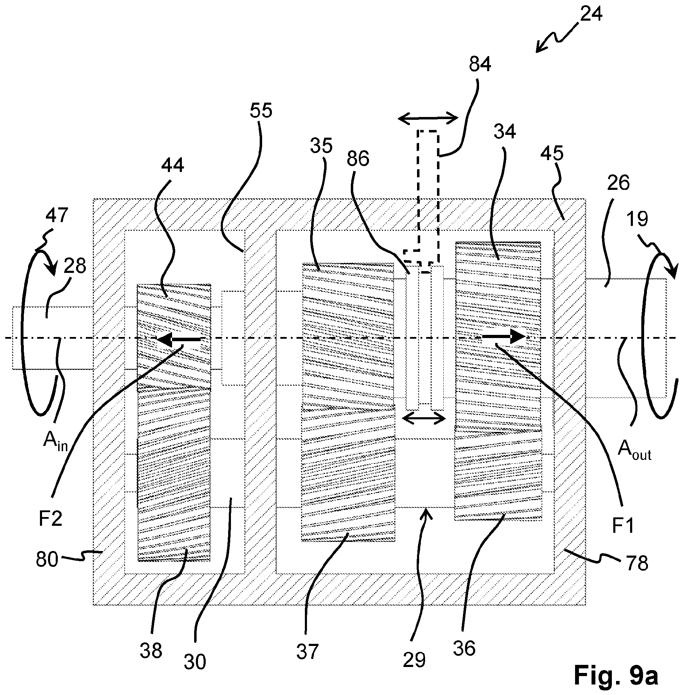

Figs. 9a-b illustrate a mobile vehicle gear unit 24 according to a fifth alternative embodiment. The mobile vehicle gear unit 24 of Figs. 9a-b has a variable total transmission ratio $I_{tot}$. The mobile vehicle gear unit 24 has a first gear, representing a first total transmission ratio $I_{tot1}$ and a second gear, representing a second total transmission ratio $I_{tot2}$. The mobile vehicle gear unit 24 of this fifth embodiment of Figs. 9a-b is suitable for electric drive vehicles. An electric drive vehicle is provided with an electric motor 16 (Fig. 1). An electric motor 16 has a high torque already at low rpm, e.g. 1000 rpm. However, in order to obtain a high top speed and/or a high energy efficiency of the electric drive vehicle the rpm span of the electric motor 16 of the electric vehicle 10 may not be sufficient. The first gear of the mobile vehicle gear unit 24 of Figs. 9a-b may be used at vehicle speeds of, for example, 0 to 120 km/h, and the second gear of the mobile vehicle gear unit 24 of Figs. 9a-b may be used at vehicle speeds of, for example, 80 to 200 km/h. Shifting between the first gear and the second gear could be made manually, using a gear-change lever, or automatically, employing, for example, the principles of the per se known robotized manual gearbox with electronic clutch.

It will be appreciated that alternative mobile vehicle gear units manufactured in accordance with the principles described hereinafter with reference to Figs. 9a-b may be provided with three, four, five, six, seven, or even more gears, providing a further variability in the total transmission ratio $I_{tot}$. Furthermore, mobile vehicle gear units manufactured in accordance with the principles described hereinafter with reference to Figs. 9a-b, and provided with anything from two to ten gears, or even more, may also be used for other types of motors 16, for example internal combustion engines using, for example, petrol, diesel, biogas, or ethanol as fuel.

Returning to Figs. 9a-b the electric drive vehicle mobile vehicle gear unit 24 comprises an output shaft 26 connected to an input shaft 28 via a layshaft arrangement 29. The layshaft arrangement 29 comprises, in this embodiment, a single layshaft 30. It will be appreciated that the gear unit 24 may, in alternative embodiments, be provided with two or more layshafts arranged in series, in accordance with the principles of Figs. 3-4, and/or with two or more parallel layshafts, in accordance with the principles of Fig. 8a.

The output shaft 26 is provided with a first driven gear 34, which is in mesh with a first drive gear 36 on the layshaft 30, and a second driven gear 35 which is in mesh with a second drive gear 37 on the layshaft 30. In neutral position, as illustrated in Figs 9a-b, the first and second driven gears 34, 35 are free-wheeling on the output shaft 26. A gear-change lever 84 may be connected to an engagement ring 86 arranged on the output shaft 26, between the first and second driven gears 34, 35. The engagement ring 86 is axially movable along the output shaft 26, in the axial direction thereof, as illustrated by arrows in Fig. 9a. The engagement ring 86 is radially locked to the output shaft 26 and rotates together with the output shaft 26. By moving the engagement ring 86 towards the first driven gear 34, i.e., by moving the engagement ring to the right in Fig. 9a, the engagement ring 86 may engage the first driven gear 34 and radially lock the first driven gear 34, such that the first driven gear 34 starts to rotate the output shaft 26. Such radial locking of the first driven gear 34 to the output shaft 26 is the same as putting in the first gear of the gear unit 24. By moving the engagement ring 86 towards the second driven gear 35, i.e., by moving the engagement ring to the left in Fig. 9a, the engagement ring 86 may engage the second driven gear 35 and radially lock the second driven gear 35, such that the second driven gear 35 starts to rotate the output shaft 26. Such radial locking of the second driven gear 35 to the output shaft 26 is the same as putting in the second gear of the gear unit 24. The engagement of the engagement ring 86 to one of the first and second driven gears 34, 35 may be made using the per se known principles of synchromesh or dogg engagement.

The first driven gear 34 of the output shaft 26 has a larger pitch diameter $D_{out1}$ than the corresponding pitch diameter $D_{drive, G1}$ of the first drive gear 36 of the layshaft 30, such that the engagement of the first driven gear 34 of the output shaft 26 with the first drive gear 36 of the layshaft 30 provides a first gear step-down, of transmission ratio $I_{G1}$, of the rotary speed from the layshaft 30 to the output shaft 26.

The second driven gear 35 of the output shaft 26 has substantially the same pitch diameter $D_{out2}$ as the corresponding pitch diameter $D_{drive, G2}$ of the second drive gear 37 of the layshaft 30, such that the engagement of the second driven gear 35 of the output shaft 26 with the second drive gear 37 of the layshaft 30 provides a neutral gear, of transmission ratio $I_{G2} = 1$, of the rotary speed from the layshaft 30 to the output shaft 26.

The layshaft 30 is provided with a driven gear 38, which is in mesh with a drive gear 44 on the input shaft 28. All gears 36, 37, 38 of the layshaft 30 are axially locked to the layshaft 30, and transfer axial thrust to the layshaft 30. The driven gear 38 of the layshaft 30 has a larger pitch diameter $D_{driven}$ than the corresponding pitch diameter $D_{in}$ of the drive gear 44 of the input shaft 28, such that the engagement of the driven gear 38 of the layshaft 30 with the drive gear 44 of the input shaft 28 provides a step-down, of transmission ratio $I_3$, of the rotary speed from the input shaft 28 to the layshaft 30.

Hence, in the first gear the mobile vehicle gear unit 24 comprises two gear steps of transmission ratios $I_{G1}$, and $I_3$, which provide a total step-down transmission ratio $I_{tot} = I_{G1}*I_3$ from the input shaft 28 to the output shaft 26, when the gear unit 24 is set in the first gear. In the second gear the mobile vehicle gear unit 24 comprises a single gear step, since $I_{G2} = 1$, of transmission ratio $I_3$, which provides a total step-down transmission ratio $I_{tot} = I_3$ from the input shaft 28 to the output shaft 26, when the gear unit 24 is set in the second gear.

The driven gears 34, 35 of the output shaft 26 are each helical gears of a first hand, said first hand in this example being right hand, right hand being defined as the teeth twisting clockwise as they recede from an observer looking along the axis $A_{out}$ of the driven gears 34, 35 of the output shaft 26. The first driven gear 34 of the output shaft 26 further has a helix angle $\psi_{out1}$, defined as the unsigned value of the angle formed between a tangent to the gear's helix at the pitch circle, and the direction of the central axis $A_{out}$ of the first driven gear 34, and the second driven gear 35 has a helix angle $\psi_{out2}$ defined in accordance with the same principles.

The drive gear 44 of the input shaft 28 is a helical gear of a first hand, said first hand in this example being right hand, defined as the teeth twisting clockwise as they recede from an observer looking along the axis $A_{in}$ of the drive gear 44 of the input shaft 28. The drive gear 44 of the input shaft 28 further has a helix angle $\psi_{in}$, defined as the unsigned value of the angle formed between a tangent to the gear's helix at the pitch circle, and the direction of the central axis $A_{in}$ of the drive gear 44. The same definition of helix angle applies, mutatis mutandis, to the other helical gears of the gear unit 24.

When the output shaft 26 is, via the layshaft 30, rotated in the driving direction 19 (Fig. 1), said driving direction being counter-clockwise, as seen in the direction of the central axis $A_{in}$ of the input shaft 28 towards the output shaft 26, the helical first driven gear 34, or the helical second driven gear 35, as the case may be, which are axially fixed to the output shaft 26, will generate an axial thrust F1 acting on the output shaft 26. Due to the hand of the driven gears 34 and 35 of the output shaft 26, the axial thrust F1 will be directed away from the input shaft 28.

The drive gear 44 of the input shaft 28 will rotate in an input direction 47 which is the same as the driving direction 19, and will generate an axial thrust F2. The drive gear 44 of the input shaft 28 is axially fixed to the input shaft 28, such that the axial force F2 will act on the input shaft 28. Due to the hand of the drive gear 44 of the input shaft 28, the axial thrust F2 will be directed away from the output shaft 26. The directions of the axial thrusts F1, F2 are illustrated by arrows. According to an alternative embodiment a gear unit could be designed with the axial thrusts F1, F2 directed towards each other.

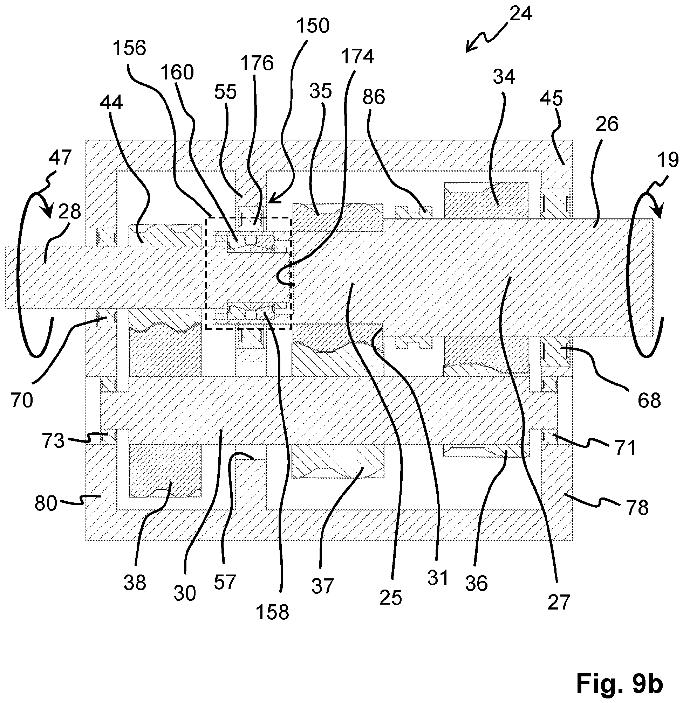

As shown in Fig. 9b, the output shaft 26 has an inner portion 25 of lower diameter than an outer portion 27. Hence, the output shaft 26 is a tapering shaft. The second driven gear 35, forming part of the second gear of the gear unit 24, transmits a lower torque than the first driven gear 34. Hence, a lower diameter of inner portion 25 is sufficient for the torques transmitted by the second driving gear 35, which saves weight. A notch 31 at the transition from the inner portion 25 to the outer portion 27 serves as an axial direction support against which the second driven gear 35 may rest.

The output shaft 26 and the input shaft 28 are concentric, and meet at a main thrust bearing support 150, as best shown in Fig. 9b. The input shaft 28 is journalled to the output shaft 26 via a main thrust bearing arrangement 156 arranged in a support wall 55 of a gear unit housing 45, which allows the output and input shafts 26, 28 to rotate independently of each other. The support wall 55 is located between the axial end walls 78, 80 of the housing 45. The layshaft 30 extends through an opening 57 in the support wall 55. Optionally, if radial support is required, a bearing may be arranged in the opening 57 for supporting the layshaft 30. The fact that the main thrust bearing arrangement 156 is arranged the support wall 55 provides radial support to the bearing arrangement 156. The main thrust bearing arrangement 156 of Fig. 9b is similar to the arrangement 156 described hereinbefore with reference to Fig. 6b and comprises a first tapered roller bearing 158 and a second tapered roller bearing 160, which are arranged in an axial recess 174 of the output shaft 26. The two tapered roller bearings 158, 160 taper in opposite directions, such that they together form a bidirectional thrust bearing arrangement. Thereby, the axial thrusts F1, F2 of the output and input shafts 26, 28 at least partly cancel each other out at the main thrust bearing arrangement 156 irrespective of the input direction of the input shaft 28. The main thrust bearing arrangement 156 thereby forms an axially rigid support structure for non-yieldingly receiving axial loads from both the output shaft 26 and the input shaft 28.

The output shaft 26 is journalled in an auxiliary bearing 176, which is mounted on a bearing support 150. The auxiliary bearing 176 does not need to be a thrust bearing, since axial thrust will mainly be borne by the main thrust bearing arrangement 156. Similar to what has been described above with reference to Fig. 5a-b, however, the auxiliary bearing 176 may, as an alternative, be a thrust bearing that can be used for preloading the output shaft 26 against e.g. a second auxiliary bearing 68. Also the input shaft 28 may be preloaded in a preloading arrangement formed by an auxiliary axial thrust bearing 70 and the main thrust bearing arrangement 156.

Neither the bearing support 150 nor the auxiliary bearing 176 mounted thereto are necessary for balancing the dynamic axial thrusts that occur when operating the gear unit 24; hence, they can be dispensed with, and radial support may be provided by other means available to the person skilled in the art.

When torque is supplied to the input shaft 28 in the input direction 47, the axial thrusts F1, F2 cancel out as a tensile force where the output and input shafts 26, 28 meet in the main thrust bearing support 150. During normal operation of a vehicle 10 (Fig. 1), the average and instantaneous torque supplied to the mobile vehicle gear unit 24 is typically larger in the input direction 47, i.e. forward movement of the vehicle, than in the opposite direction. The opposite direction may, for example, be used when the vehicle 10 (Fig. 1) is to be reversed. Reversing of an electric drive vehicle may be made by simply shifting the rotational direction of the electric motor, to a direction which is opposite to the input direction 47. When the vehicle is reversed the axial thrusts F1, F2 cancel out as a compression force where the output and input shafts 26, 28 meet in the main thrust bearing support 150. The conditions described hereinbefore with reference to expressions (1)-(3) may be applied also to the output and input shafts 26, 28 of Figs. 9a-b to obtain the best possible cancelling out of axial thrusts F1 and F2.

In the embodiment of Figs 9a-b the output shaft 26 and the input shaft 28 are concentric, and meet at a main thrust bearing arrangement 156 being similar to the main thrust bearing arrangement 156 described hereinbefore with reference to Fig. 6b. It will be appreciated that other types of bearing arrangements may also be combined with the mobile vehicle gear unit 24 of Figs 9a-b. For example, the output shaft 26 and the input shaft 28 of the gear unit 24 of Figs 9a-b could be arranged in an output shaft main thrust bearing arrangement 56 and an input shaft main thrust bearing arrangement 62 of the type described hereinbefore with reference to Fig. 5b, or in a main thrust bearing arrangement 156 of the type described hereinbefore with reference to Fig. 7b.

In order to achieve a minimum total axial load onto the gear unit housing 45, also the layshaft 30 may be axially balanced. This may be achieved by the layshaft 30 being equipped with a respective driven gear 38 and respective drive gears 36, 37 of the same hand, preferably with a larger helix angle on its respective larger pitch diameter gear than on its respective smaller pitch diameter gear. In the exemplary mobile vehicle gear unit 24 of Fig. 9b, the first drive gear 36 of the layshaft 30 has a first drive gear helix angle $\psi_{drive,G1}$, the second drive gear 37 has a second drive gear helix angle $\psi_{driveG2}$, and the driven gear 38 has a driven gear helix angle $\psi_{driven}$ of the same hand as the first and second drive gears 36, 37. Thereby, when the output shaft 26 is rotated in said driving direction 19, at least a portion of the axial thrusts generated by the helical gears 36, 37, 38 of the layshaft 30 will cancel out as a compression force in the layshaft 30. It will be appreciated that when the gear unit 24 is set in first gear, the forces of the first drive gear 36 should cancel out, at least partly, the axial thrust of the driven gear 38, and when the gear unit 24 is set in second gear, the forces of the second drive gear 37 should cancel out, at least partly, the axial thrust of the driven gear 38.

The pitch diameter $D_{drive,G1}$ of the first drive gear 36 is smaller than the pitch diameter $D_{driven}$ of the driven gear 38; hence, the driven gear helix angle $\psi_{driven}$ is preferably larger than the first drive gear helix angle $\psi_{drive,G1}$, such that axial balance is still further improved. A similar reasoning can be made with respect to the pitch diameter and gear helix angle of the second drive gear 37. The conditions described hereinbefore with reference to expressions (4)-(6) may be applied also for balancing axial thrusts of the layshaft 30 of Fig. 9b. The layshaft 30 is journalled in bearings 71, 73 in the respective end walls 78, 80 of the housing 45. The bearings 71, 73 need only, when the axial thrusts of the layshaft 30 are at least partly cancelled out, as described hereinbefore, take up radial forces, and rather small axial thrusts.

In all embodiments described hereinbefore, the at least partial cancelling out of axial forces F1, F2 in an axially rigid support structure results in reduced movement of at least the output and input shafts 26, 28 and their associated gears 34, 44. This allows for a tighter backlash compared to what is possible to obtain in gear units of prior art. In other words, the mobile vehicle gear unit 24 may be designed as a low-backlash gear unit. As a rule of thumb, the angular gear play $\theta_{G1}$ of a gear $G_1$ having $n_{G1}$ teeth, the gear $G_1$ mating with another gear $G_{G2}$, which is held fixed, may be obtained through the relation

$$\theta_{G1}=\tan^{-1}(k/n_{G1}) \qquad (7)$$

wherein the number k is determinative of the angular play. As applied to an exemplary gear engagement of the mobile vehicle gear unit 24 described hereinbefore, the angular gear play $\theta_{34}$ of the driven gear 34 of the output shaft 26, having $n_{34}$ teeth, may be obtained through the relation

$$\theta_{34}=\tan^{-1}(k/n_{34}) \qquad (8)$$

assuming that the drive gear 36 of the first layshaft 30 is held immobile. Typically, a suitable angular gear play of each gear 34, 36, 38, 40, 42, 44, relative to its respective mating gear, is obtained for k<0.1. Hence, for a reasonably tight low-backlash gear unit, the majority, and preferably all of the gears 34, 36, 38, 40, 42, 44 of the gear unit 24 have an angular gear play $\theta_G$ fulfilling the relation

$$\theta_G<\tan^{-1}(0.1/n) \qquad (9)$$

wherein n is the number of teeth of the respective gear. An even tighter low-backlash gear unit may be obtained provided that the majority, and preferably all of the gears 34, 36, 38, 40, 42, 44 of the gear unit 24 have an angular gear $\theta_G$ play fulfilling the relation

$$\theta_G<\tan^{-1}(0.07/n) \qquad (10).$$

An axial play allowing a pair of shafts $S_1$, $S_2$, engaging via helical gears $G_1$, $G_2$, to move relative to each other results in an angular play between the shafts, since the relative axial translation of the shafts $S_1$, $S_2$ will make the gears $G_1$, $G_2$ turn in their helical engagement. Hence, a reduced axial movement of the shafts in a gear unit also directly results in a reduced angular play between the shafts.

For the pair of shafts $S_1$, $S_2$, the same rule of thumb may be applicable provided that the gears $G_1$, $G_2$ are axially fixed to their respective shaft $S_1$, $S_2$; the angular play $\theta_{S1}$ of the shaft $S_1$ relative to the shaft $S_2$ may be obtained through the relation

$$\theta_{S1}=\tan^{-1}(k/n_{G1}) \qquad (11)$$

wherein the gear $G_1$ has $n_{G1}$ teeth, the number k again being determinative of the angular play.

For a gear unit 24 designed for at least partly balancing axial thrusts, and hence reducing axial movement, according to the guidelines disclosed herein, the angular shaft play $\theta_S$ of each shaft 26, 28, 30, 32, as connected to another shaft via mating gears, preferably corresponds to a number k<0.11, more preferably to a number k<0.08, and even more preferably to a number k<0.07. Thereby. the total angular shaft play between the input and output shafts 26, 28 will be low.

Although possible in theory, it is in practice, due to e.g. friction, oil viscosity, production tolerances, wear etc., impossible to perfectly cancel out the axial forces F1, F2 to exactly 100%. Therefore it is preferred that both output and input shafts 26, 28, as well as their respective gears 34, 44, be axially fixed relative to the housing 45, e.g. by means of a thrust bearing arrangement. Thereby, they will not translate axially, as the load conditions change, while the gear unit 24 is operated. This is of particular value in a gear unit for the varying load conditions typical of a mobile vehicle gear unit 24, since significant axial translation may cause shafts or gears to reach an end position in the gear unit housing 45, resulting in damage to the gear unit 24. Axial translation of the output or input shafts 26, 28 may also damage any upstream or downstream equipment such as the motor 16 or the drive shaft 20.

Even though not necessary, the output and input shafts 26, 28 illustrated in the examples hereinbefore are also radially fixed relative to the gear unit housing 45. Thereby, they will not translate radially due to changing load conditions while the mobile vehicle gear unit 24 is operated.

In order to at least partly balance axial forces within each layshaft 30, 32, the respective driven and drive gears 38, 42, 36, 40 of each layshaft 30, 32 are axially fixed relative to each other. By way of example, the drive gear 36 of the first layshaft 30 is axially fixed relative to the driven gear 38 of the same layshaft 30. Also the layshafts 30, 32 may be axially fixed relative to the gear unit housing 45. The layshafts 30, 32 may also be preloaded between respective pairs of axial preload bearings (not shown) in a manner similar to the preloading of the output and input shafts 26, 28.

The invention has mainly been described above with reference to a few embodiments. However, as is readily appreciated by a person skilled in the art, other embodiments than the ones disclosed above are equally possible within the scope of the invention, as defined by the appended patent claims.

For example, it will be appreciated that features of the different embodiments disclosed hereinbefore may be combined, so as to form still further embodiments. By way of example, the expressions (1) - (6) disclosed with reference to Fig. 4 represent preferred relations between transmission ratio, gear pitch diameters, and respective helix angles valid for all embodiments.

Moreover, depending on the desired transmission ratio, the gear unit may be provided with any number of layshafts connected in series between the input shaft and the output shaft, for example a single layshaft or three layshafts. In order to obtain the axial thrust balance described hereinbefore, the respective hands, pitch diameters and helix angles of the driven gear of the output shaft and the drive gear of the input shaft should be selected accordingly, as has been described hereinbefore.

The gear unit may also be provided with any number of layshaft arrangements connected in parallel between the input and output shafts. The mathematical expressions and conditions above relating to axial balance are still valid, if the parallel layshaft arrangements are similar with respect to helix angles and gear radii. For non-similar parallel layshaft arrangements, the expressions (1) - (6) may need to be adjusted accordingly, as will be appreciated by those skilled in the art.

It is not necessary that the mobile vehicle gear unit 24 be placed in a housing so as to form a separate gearbox; alternatively, the gear unit 24 may be built into the motor 16, into a common structure in which shafts may be journalled, and to which a main thrust bearing support 50 may be attached.

The gear unit 24 may form a part of a larger gear unit or system; i.e., the gear unit 24 may be combined with other gearing, connected to the input and/or output shafts 26, 28, so as to form a larger gear system. By way of example, the gear unit 24 may be connected to a planetary gear, which, together with the gear unit 24, forms a gear system having a total transmission ratio different from that of the gear unit 24 alone.

It has been described above how the mobile vehicle gear unit 24 can be used for providing a transmission ratio within a vehicle 10. However, the field of application for a gear unit according to the invention is not limited to vehicles 10, such as cars, busses and lorries; by way of example, mobile, axial thrust-balanced gear units may as well be used in other mobile applications, e.g. ships for sea-transportation, for example passenger transportation ships and cargo-ships, in which case the gear unit may be installed for stepping down the rpm of a diesel engine to a suitable rpm for the propeller or other suitable propelling device. Another example of a mobile vehicle application is aircraft, in which the mobile, axial thrust-balanced gear unit may be used for stepping down the rpm of the turbine or engine driving the aircraft.

The terms "helical gear" and "helix angle" are to be interpreted broadly, so as to include gears having teeth that are curved, such as spiral gears, but as a whole follow a generally helical path, such that those gears function in a manner equivalent to helical gears.

**Claims**

1.  Mobile vehicle gear unit comprising an output shaft (26), and an input shaft (28) substantially parallel with said output shaft (26), the gear unit being configured for providing a transmission ratio ($I_{tot}$) between said input shaft (28) and said output shaft (26) via a layshaft arrangement (29), the output shaft (26) being provided with a driven gear (34) in mesh with a drive gear (36) of said layshaft arrangement (29), and the input shaft (28) being provided with a drive gear (44) in mesh with a driven gear (42) of said layshaft arrangement (29), the transmission ratio ($I_{tot}$) being non-unity such that one gear (44) of the driven gear (34) of the output shaft (26) and the drive gear (44) of the input shaft (28) will be arranged for operating at a relatively lower torque, and the other gear (34) will be arranged for operating at a relatively higher torque, said relatively higher torque being higher than said relatively lower torque;

said driven gear (34) of said output shaft (26) being helical of a first hand;

said drive gear (44) of said input shaft (28) being helical of a second hand, said second hand being the same as the first hand for a positive transmission ratio ($I_{tot}$) and opposite to said first hand for a negative transmission ratio ($I_{tot}$); and

said gear (44) arranged for operating at a relatively lower torque having a helix angle ($\psi_{in}$) exceeding the helix angle ($\psi_{out}$) of said gear (34) arranged for operating at a relatively higher torque;

**characterized in**

the output shaft (26) being journalled to the input shaft (28) in a main thrust bearing arrangement (156) which is arranged in an axial recess (174) of the output shaft (26) and limits axial movement of the output shaft (26) relative to the input shaft (28) in two axial directions.

2. Mobile vehicle gear unit according to claim 1, said output shaft (26) being arranged on a first side of said main thrust bearing arrangement (156), and said input shaft (28) being arranged on a second side of said main thrust bearing arrangement (156), said second side being opposite to said first side.

3. The mobile vehicle gear unit according to any of the previous claims,

said driven gear (34) of said output shaft (26) having an output shaft driven gear pitch diameter $D_{out}$ and an output shaft driven gear helix angle $\psi_{out}$;

said drive gear (44) of said input shaft (28) having an input shaft drive gear pitch diameter $D_{in}$ and an input shaft drive gear helix angle $\psi_{in}$; and

said driven gear (34) of said output shaft (26) and said drive gear (44) of said input shaft (28) satisfying a condition corresponding to:

$$0.2 < \left| I_{tot} \frac{D_{in} \tan \Psi_{out}}{D_{out} \tan \Psi_{in}} \right| < 5,$$

wherein $I_{tot}$ is the transmission ratio of said gear unit (24).

4. The mobile vehicle gear unit according to any of claims 1-3, said layshaft arrangement comprising at least one layshaft (30), and optionally a plurality of substantially parallel layshafts (30, 32; 30', 32') connected in series, each layshaft (30, 32; 30', 32') being provided with a helical drive gear (36, 40; 36', 40') and a helical driven gear (38, 42; 38', 42'), the driven gear (38, 42; 38', 42') of each layshaft (30, 32; 30', 32') being of the same hand as the drive gear (36, 40; 36', 40') of the same layshaft (30, 32; 30', 32').

5. The mobile vehicle gear unit according to claim 4, wherein, for each layshaft i (30; 32; 30'; 32') of said at least one layshaft, or said plurality of layshafts,

the respective drive gear (36; 40; 36'; 40') has a drive gear pitch diameter $D_{drive,i}$ and a drive gear helix angle $\psi_{drive,i}$;

the respective driven gear (38; 42; 38'; 42') has a driven gear pitch diameter $D_{driven, i}$ and a driven gear helix angle $\psi_{driven, i}$, the driven gear helix angle $\psi_{driven, i}$ being different from the drive gear helix angle $\psi_{drive, i}$; and

$$0.2 < |(D_{drive, i} * \tan \psi_{driven, i})/(D_{driven, i} * \tan \psi_{drive, i})| < 5.$$

6. The mobile vehicle gear unit according to any of claims 1-5, said gear unit (24) being a gear unit for an electric drive vehicle (10).

7. The mobile vehicle gear unit according to any of claims 1-6, wherein the driven gear (34) of the output shaft (26) is axially fixed to the output shaft (26), and the drive gear (44) of the input shaft (28) is axially fixed to the input shaft (28).

8. The mobile vehicle gear unit according to claim 4 or claim 5 wherein, for each layshaft (30; 32) of said layshaft arrangement (29), the driven gear (38; 42) of the layshaft (30; 32) is axially fixed relative to the drive gear (36; 40) of the layshaft (30; 32).

9. The mobile vehicle gear unit according to any of claims 1-8, wherein, for each shaft (26, 28, 30; 32) of said gear unit (24), the angular shaft play $\theta_S$ relative to another shaft of said gear unit (24) satisfies the condition

$$\theta_S < \tan^{-1}(0.11/n_G)$$

wherein $n_G$ represents the number of teeth of a gear (34, 36, 38, 40, 42, 44) of said shaft (26, 28, 30; 32), said gear (34, 36, 38, 40, 42, 44) being in engagement with a gear of said another shaft.

**Patentansprüche**

1. Mobilfahrzeug-Getriebeeinheit, umfassend eine Ausgangswelle (26) und eine Eingangswelle (28), die im Wesentlichen parallel zu der Ausgangswelle (26) verläuft, wobei die Getriebeeinheit zum Bereitstellen eines Übersetzungsverhältnisses ($I_{tot}$) zwischen der Eingangswelle (28) und der Ausgangswelle (26) über eine Vorgelegewellenanordnung (29) ausgelegt ist, wobei die Ausgangswelle (26) mit einem angetriebenen Zahnrad (34) versehen ist, das mit einem Antriebszahnrad (36) der Vorgelegewellenanordnung (29) in Eingriff steht, und wobei die Eingangswelle (28) mit einem Antriebszahnrad (44) versehen ist, das mit einem angetriebenen Zahnrad (42) der Vorgelegewellenanordnung (29) in Eingriff steht, wobei das Übersetzungsverhältnis ($I_{tot}$) von Eins verschieden ist, so dass ein Zahnrad (44) von dem angetriebenen Zahnrad (34) der Ausgangswelle (26) und dem Antriebszahnrad (44) der Eingangswelle (28) zum Betrieb mit einem relativ geringeren Drehmoment angeordnet sein wird und das andere Zahnrad (34) zum Betrieb mit einem relativ höheren Drehmoment angeordnet sein wird, wobei das relativ höhere Drehmoment höher als das relativ niedrigere Drehmoment ist;
   wobei das angetriebene Zahnrad (34) der Ausgangswelle (26) mit einer ersten Gängigkeit schrägverzahnt ist;
   wobei das Antriebszahnrad (44) der Eingangswelle (28) mit einer zweiten Gängigkeit schrägverzahnt ist, wobei die zweite Gängigkeit dieselbe wie die erste Gängigkeit für ein positives Übersetzungsverhältnis ($I_{tot}$) und entgegengesetzt der ersten Gängigkeit für ein negatives Übersetzungsverhältnis ($I_{tot}$) ist; und
   wobei das Zahnrad (44), das zum Betrieb mit einem relativ geringeren Drehmoment angeordnet ist, einen Schrägungswinkel ($\psi_{ein}$) aufweist, der größer ist als der Schrägungswinkel ($\psi_{aus}$) des Zahnrads (34), das zum Betrieb mit einem relativ höheren Drehmoment angeordnet ist;
   **dadurch gekennzeichnet, dass**
   die Ausgangswelle (26) in einer Hauptdrucklager-Anordnung (156), die in einer axialen Aussparung (174) der Ausgangswelle (26) angeordnet ist und eine axiale Bewegung der Ausgangswelle (26) bezogen auf die Eingangswelle (28) in zwei axiale Richtungen beschränkt, an der Eingangswelle (28) gelagert ist.

2. Mobilfahrzeug-Getriebeeinheit nach Anspruch 1, wobei die Ausgangswelle (26) auf einer ersten Seite der Hauptdrucklager-Anordnung (156) angeordnet ist und die Eingangswelle (28) auf einer zweiten Seite der Hauptdrucklager-Anordnung (156) angeordnet ist, wobei die zweite Seite der ersten Seite gegenüberliegt.

3. Mobilfahrzeug-Getriebeeinheit nach einem der vorhergehenden Ansprüche, wobei das angetriebene Zahnrad (34) der Ausgangswelle (26) einen Teilkreisdurchmesser $D_{aus}$ des angetriebenen Zahnrads der Ausgangswelle und einen Schrägungswinkel $\psi_{aus}$ des angetriebenen Zahnrads der Ausgangswelle aufweist;
   wobei das Antriebszahnrad (44) der Eingangswelle (28) einen Teilkreisdurchmesser $D_{ein}$ des Antriebszahnrads der Eingangswelle und einen Schrägungswinkel $\psi_{ein}$ des Antriebszahnrads der Eingangswelle aufweist; und
   das angetriebene Zahnrad (34) der Ausgangswelle (26) und das Antriebszahnrad (44) der Eingangswelle (28) eine Bedingung erfüllen, die Folgendem entspricht:

$$0{,}2 < \left| I_{tot} \frac{D_{ein}}{D_{aus}} \frac{\tan \Psi_{aus}}{\tan \Psi_{ein}} \right| < 5,$$

   wobei $I_{tot}$ das Übersetzungsverhältnis der Getriebeeinheit (24) ist.

4. Mobilfahrzeug-Getriebeeinheit nach einem der Ansprüche 1 - 3, die Vorgelegewellenanordnung umfassend mindestens eine Vorgelegewelle (30) und wahlweise mehrere im Wesentlichen parallele Vorgelegewellen (30, 32; 30', 32'), die in Reihe verbunden sind, wobei jede Vorgelegewelle (30, 32; 30', 32') mit einem schrägverzahnten Antriebszahnrad (36, 40; 36', 40') und einem schrägverzahnten angetriebenen Zahnrad (38, 42; 38', 42') versehen ist, wobei das angetriebene Zahnrad (38, 42; 38', 42') jeder Vorgelegewelle (30, 32; 30', 32') dieselbe Gängigkeit wie das Antriebszahnrad (36, 40; 36', 40') derselben Vorgelegewelle (30, 32; 30', 32') aufweist.

5. Mobilfahrzeug-Getriebeeinheit nach Anspruch 4, wobei für jede Vorgelegewelle i (30; 32; 30'; 32') der mindestens einen Vorgelegewelle oder der mehreren Vorgelegewellen

das entsprechende Antriebszahnrad (36; 40; 36'; 40') einen Teilkreisdurchmesser $D_{Antrieb, i}$ des Antriebszahnrads und einen Schrägungswinkel $\psi_{Antrieb, i}$ des Antriebszahnrads aufweist;
das entsprechende angetriebene Zahnrad (38; 42; 38'; 42') einen Teilkreisdurchmesser $D_{angetrieben, i}$ des angetriebenen Zahnrads und einen Schrägungswinkel $\psi_{angetrieben, i}$ des angetriebenen Zahnrads aufweist, der sich von dem Schrägungswinkel $\psi_{Antrieb, i}$ des Antriebszahnrads unterscheidet; und

$$0,2 < | (D_{Antrieb, i} * \tan \psi_{angetrieben, i}) / (D_{angetrieben, i} * \tan \psi_{Antrieb, i}) | < 5.$$

6. Mobilfahrzeug-Getriebeeinheit nach einem der Ansprüche 1 - 5, wobei die Getriebeeinheit (24) eine Getriebeeinheit für ein elektrisch angetriebenes Fahrzeug (10) ist.

7. Mobilfahrzeug-Getriebeeinheit nach einem der Ansprüche 1- 6, wobei das angetriebene Zahnrad (34) der Ausgangswelle (26) axial an der Ausgangswelle (26) fixiert ist und das Antriebszahnrad (44) der Eingangswelle (28) axial an der Eingangswelle (28) fixiert ist.

8. Mobilfahrzeug-Getriebeeinheit nach Anspruch 4 oder 5, wobei
für jede Vorgelegewelle (30; 32) der Vorgelegewellenanordnung (29) das angetriebene Zahnrad (38; 42) der Vorgelegewelle (30; 32) bezogen auf das Antriebszahnrad (36; 40) der Vorgelegewelle (30; 32) axial fixiert ist.

9. Mobilfahrzeug-Getriebeeinheit nach einem der Ansprüche 1- 8, wobei für jede Welle (26, 28, 30; 32) der Getriebeeinheit (24), das Winkelspiel $\theta_S$ der Welle bezogen auf eine andere Welle der Getriebeeinheit (24) folgende Bedingung erfüllt

$$\theta_s < \tan^{-1}(0,11/n_G)$$

wobei ring die Anzahl der Zähne des Zahnrads (34, 36, 38, 40, 42, 44) der Welle (26, 28, 30; 32) darstellt, wobei das Zahnrad (34, 36, 38, 40, 42, 44) mit einem Zahnrad einer anderen Welle in Eingriff steht.

## Revendications

1. Réducteur de véhicule mobile, comprenant un arbre de sortie (26), et un arbre d'entrée (28) sensiblement parallèle audit arbre de sortie (26), le réducteur étant conçu pour établir un ratio de transmission ($I_{tot}$) entre ledit arbre d'entrée (28) et le dit arbre de sortie (26) via un dispositif d'arbre secondaire (29), l'arbre de sortie (26) étant pourvu d'un engrenage mené (34) en prise avec un engrenage menant (36) dudit dispositif d'arbre secondaire (29) et l'arbre d'entrée (28) étant pourvu d'un engrenage menant (44) en prise avec un engrenage mené (42) dudit dispositif d'arbre secondaire (29), le ratio de transmission ($I_{tot}$) étant non unitaire de manière à ce qu'un engrenage (44) parmi l'engrenage mené (34) de l'arbre de sortie (26) et l'engrenage menant (44) de l'arbre d'entrée (28) soit disposé de manière à fonctionner à un couple relativement faible et l'autre engrenage (34) soit disposé de manière à fonctionner à un couple relativement élevé, ledit couple relativement élevé étant supérieur audit couple relativement faible ;
ledit engrenage mené (34) dudit arbre de sortie (26) étant hélicoïdal d'une première main ;
ledit engrenage menant (44) dudit arbre d'entrée (28) étant hélicoïdal d'une seconde main, ladite seconde main étant la même que la première main pour un ratio de transmission positif ($I_{tot}$) et étant opposée à ladite première main pour un ratio de transmission négatif ($I_{tot}$) ; et
ledit engrenage (44) conçu pour fonctionner à un couple relativement faible ayant un angle d'hélice ($\psi_{in}$) excédant l'angle d'hélice ($\psi_{out}$) dudit engrenage (34) conçu pour fonctionner à un couple relativement élevé ;
**caractérisé en ce que**
l'arbre de sortie (26) est tourillonné à l'arbre d'entrée (28) dans un dispositif de palier de butée principal (156) qui est disposé dans un retrait axial (174) de l'arbre de sortie (26) et limite le mouvement axial de l'arbre de sortie (26) par rapport à l'arbre d'entrée (28) dans deux directions axiales.

**2.** Dispositif de réducteur de véhicule mobile selon la revendication 1, le dit arbre de sortie (26) étant disposé sur une première face dudit dispositif de palier de butée (156) et le dit arbre d'entrée (28) étant disposé sur une seconde face dudit dispositif de palier de butée principal (156), ladite seconde face étant opposée à la dite première face.

**3.** Dispositif de réducteur de véhicule mobile selon l'une quelconque des revendications précédentes, ledit engrenage mené (34) dudit arbre de sortie (26) ayant un diamètre de pas d'engrenage mené d'arbre de sortie $D_{out}$ et un angle d'hélice d'engrenage mené d'arbre de sortie $\psi_{out}$ ;

ledit engrenage menant (44) dudit arbre d'entrée (28) ayant un diamètre de pas d'engrenage mené d'arbre d'entrée $D_{in}$ et un angle d'hélice d'engrenage menant d'arbre d'entrée $\psi_{in}$ ; et

ledit engrenage mené (34) dudit arbre de sortie (26) et ledit engrenage menant (44) dudit arbre d'entrée (28) satisfaisant aux conditions correspondant à :

$$0{,}2 < \left| I_{tot} \frac{D_{in} \ \tan \Psi_{out}}{D_{out} \ \tan \Psi_{in}} \right| < 5,$$

sachant que $I_{tot}$ est le ratio de transmission dudit réducteur (24).

**4.** Dispositif de réducteur de véhicule mobile selon l'une quelconque des revendications 1 - 3, le dispositif d'arbre secondaire comprenant au moins un arbre secondaire (30), et en option une pluralité d'arbres secondaires sensiblement parallèles (30, 32 ; 30', 32') connectés en série, chaque arbre secondaire (30, 32 ; 30', 32') étant pourvu d'un engrenage menant hélicoïdal (36, 40 ; 36', 40') et d'un engrenage mené hélicoïdal (38, 42 ; 38', 42'), l'engrenage mené (38, 42 ; 38', 42') de chaque arbre secondaire (30, 32 ; 30', 32') étant de la même main que l'engrenage menant (36, 40 ; 36', 40') du même arbre secondaire (30, 32 ; 30', 32').

**5.** Dispositif de réducteur de véhicule mobile selon la revendication 4, dans lequel, pour chaque arbre secondaire (30 ; 32 ; 30' ; 32') dudit au moins un arbre secondaire ou ladite pluralité d'arbres secondaires l'engrenage menant respectif (36 ; 40 ; 36' ; 40') a un diamètre de pas d'engrenage menant $D_{drive, i}$ et un angle d'hélice d'engrenage menant $\psi_{drive, i}$ ;

l'engrenage mené respectif (38 ; 42 ; 38' ; 42') a un diamètre de pas d'engrenage mené $D_{driven, i}$ et un angle d'hélice d'engrenage mené $\psi_{driven, i}$, l'angle d'hélice d'engrenage mené $\psi_{driven, i}$ étant différent de l'angle d'hélice d'engrenage menant $\psi_{drive, i}$ ; et

$$0{,}2 < |(D_{drive, i} * \tan \psi_{driven, i}) / (D_{driven, i} * \tan \psi_{drive, i})| < 5.$$

**6.** Dispositif de réducteur de véhicule mobile selon l'une quelconque des revendications 1 - 5, ledit réducteur (24) étant un réducteur pour véhicule à propulsion électrique (10).

**7.** Dispositif de réducteur de véhicule mobile selon l'une quelconque des revendications 1 - 6, dans lequel l'engrenage mené (34) de l'arbre de sortie (26) est fixé axialement à l'arbre de sortie (26), et l'engrenage menant (44) de l'arbre d'entrée (28) est fixé axialement à l'arbre d'entrée (28).

**8.** Dispositif de réducteur de véhicule mobile selon la revendication 4 ou la revendication 5, dans lequel, pour chaque arbre secondaire (30 ; 32) dudit dispositif d'arbre secondaire (29), l'engrenage mené (38 ; 42) de l'arbre secondaire (30 ; 32) est fixé axialement par rapport à l'engrenage menant (36 ; 40) de l'arbre secondaire (30 ; 32).

**9.** Dispositif de réducteur de véhicule mobile selon l'une quelconque des revendications 1 - 8, dans lequel, pour chaque arbre (26, 28, 30 ; 32) dudit réducteur (24), le jeu d'arbre angulaire $\theta s$ par rapport à un autre arbre dudit réducteur (24) satisfait à la condition

$$\theta_s < \tan^{-1}(0{,}11/n_G)$$

sachant que $n_G$ représente le nombre de dents d'un engrenage (34, 36, 38, 40, 42, 44) dudit arbre (26, 28, 30 ; 32), ledit engrenage (34, 36, 38, 40, 42, 44) étant engagé dans un engrenage dudit autre arbre.

**Fig. 1**

**Fig. 2**

Fig. 3

**Fig. 4**

**Fig. 5a**

**Fig. 5b**

**Fig. 6a**

24

150

68

F2

28

26

F1

**Fig. 6b**

176

156

174

28

26

160

158

**Fig. 7a**

**Fig. 7b**

**Fig. 8a**

36' 30' 38' 24

29'

34 42' 32'

26 28

B 44 B

40' 32

42

40

36 30 38

29

**Fig. 8b** 34

156 38' 32'

44

40'

Fig. 9a

**Fig. 9b**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 4297906 A
- FR 1522323 A
- DE 1053270 B
- DE 19654896 A1